# NEW EUROPEAN PATENT SPECIFICATION

(11) **EP 2 434 437 B2**
(45) Date of publication and mention of the opposition decision: **01.11.2023**
(45) Mention of the grant of the patent: 26.06.2013
(21) Application number: 11182173.2
(22) Date of filing: 21.09.2011
(51) Int. Cl.: G06K 19/077, G06K 19/02, B42D 25/40

(54) **Method of manufacturing anti-counterfeiting labels**
Verfahren zum Herstellen von Antifälschungsetiketten
Procédé de fabrication d'étiquettes anti-contrefaçon

(30) Priority: 22.09.2010 IT RM20100489
(43) Date of publication of application: 28.03.2012
(73) Proprietor: Istituto Poligrafico e Zecca dello Stato S.p.A., 00138 Roma (RM) (IT)
(72) Inventor: Ghisa, Giuseppe, 00138 Roma RM (IT); Luciani, Laura, 00138 Roma RM (IT)
(74) Representative: Primiceri, Maria Vittoria

(56) References cited:
- EP-A2- 1 516 749
- EP-A2- 1 739 597
- WO-A1-2006/097276
- WO-A1-2008/135285
- US-A1- 2008 020 189

## Description

"Smart label" or "smart tag" are elements suitable to be applied onto a product and capable of emitting short-range radio signals useful for identification, authentication and/or tracking the product itself. Typically, such labels therefore embed a so-called RFID chip.

Radiofrequency (RF) technology is preferred over competitor reading and identification systems, such as bar/dot codes, contact chips and magnetic bars, as neither contact nor relative positioning between label and reader is necessary.

The labels at issue can be in paper format, optionally self-adhesive, or in the form of a plastic tag.

However, known labels do not reach an optimal compromise between durability and mechanical resistance on the one hand, and versatility and reliability of application onto different product supports on the other hand.

In particular, US 2008/0020189 discloses an entirely flexible textile label comprising, in sequence, an upper textile layer, a first adhesive layer, an antenna with a chip, a second flexible adhesive layer made of polyester, another textile layer and a further lower adhesive layer. The upper textile layer and the first adhesive layer applied therebelow project beyond the extension of the remainder of the label, forming a protruding region that can be sewn onto various product supports.

However, an entirely flexible label does not offer adequate protection to the "smart" RFID element.

Therefore, the technical problem formulated and solved by the present invention is that of providing a manufacturing method of an anticounterfeiting label allowing overcoming the drawbacks mentioned above with reference to the known art.

Such a problem is solved by a method according to claim 1.

Preferred features of the present invention are indicated in the dependent claims.

In the present context, the term "label" is to be understood in a broad sense to include any element, such as e.g. tags, cards or tickets, applicable onto a product for its identification, authentication and/or traceability.

The label of the present disclosure is extremely resistant from a mechanical point of view by virtue of the layers of rigid plastic material, concomitantly allowing an extreme versatility of application onto products by virtue of its own flexible extension, which preferably can be sewn. The fact that such extension is made as an intermediate layer interposed between two rigid plastic layers allows an optimal protection and a firm retaining thereof, without the risk that it may detach from the main body.

Moreover, the use of the rigid plastic layers allows the insertion therebetween of anti-counterfeiting elements such as holograms and/or security inks or other.

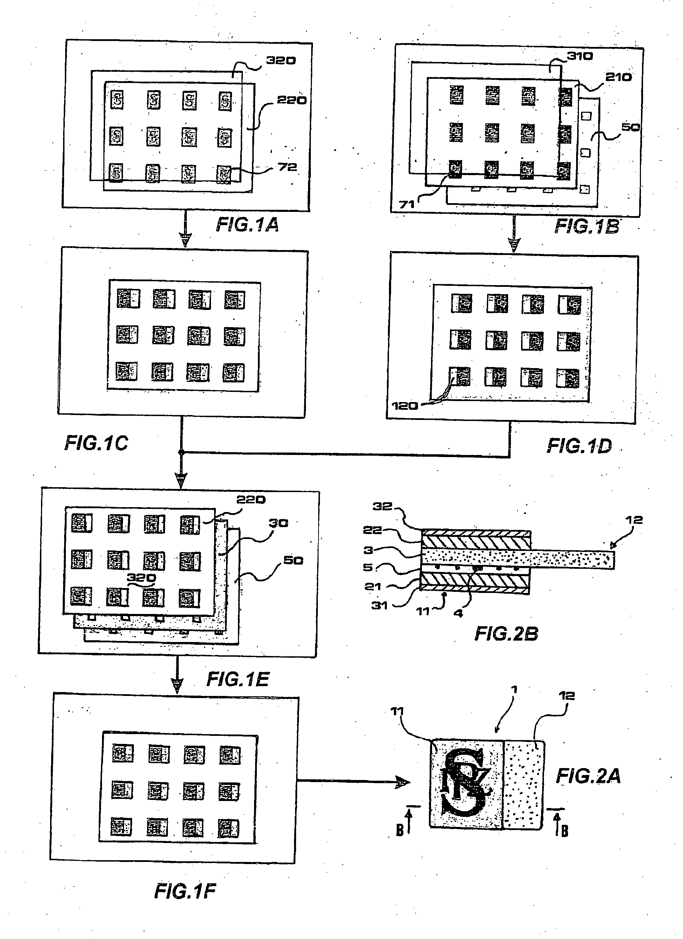

Other advantages, features and the operation steps of the present invention will be explained in the following detailed description of an embodiment thereof, given by way of example and not for limitative purposes. Reference will be made to the figures of the annexed drawings, wherein:
▪ Figures 1A to 1F show respective front views of components of a label not according to the present invention, each referring to a respective step of a preferred method of manufacturing of such a label; and
▪ Figures 2A and 2B relate to a label resulting from the steps of the method illustrated in Figures 1A-1F, respectively showing a front view and a longitudinal sectional view taken along line B-B of Figure 2A, the latter view bearing - for greater clarity - thicknesses magnified and not necessarily representative of the mutual proportions of the components.

Referring initially to Figures 2A and 2B, an anti-counterfeiting label not according to the invention is globally denoted by 1.

The label 1 comprises a multilayer main body 11 and a flexible extension 12 of said main body 11, which in the present example is made of a textile material and is anchorable by sewing onto a product or support.

As just mentioned, main body 11 has a multilayer structure, which in the present example provides for a first and a second layer, 21 and 22 respectively, of a rigid plastic material. Said layers 21 and 22 are arranged at opposite sides at the external faces of main body 11.

Preferably, one of or both such layers 21 and 22 are made of polycarbonate, and even more preferably of PVC, PC and/or PET/PETG or any other material suitable for the manufacturing of so-called "*plastic cards*". In general, the two rigid layers 21 and 22 are made of a material not easily deformable or flexible manually, particularly in comparison with a flexible intermediate layer interposed therebetween, which will be described later. By way of non-limiting example, the rigidity, according to Standard UNI9070, of layers 21 and 22 is greater than 40 mN.

Preferably, one of or both the plastic layers 21 and 22 bear at least one anti-counterfeiting optical element, preferably a security hologram or an element obtained by UV litho-printing with iris, UV fluorescent printing, intaglio printing, silk-screen printing with OVI inks and/or laser engraving.

Moreover, in the present example, externally to each first and second layer 21 and 22 (which could be referred to as "*core*") a protecting coating (which could be referred to as "*overlay*") is applied, denoted by 31 and 32, respectively.

Moreover, between first and second rigid plastic layer 21, 22, the above-mentioned intermediate layer of flexible, and in particular textile, material, generally denoted by 3, is interposed. Such layer, by extending also past main body 11, forms the above-mentioned textile extension 12.

In addition, between textile layer 3 and first rigid plastic layer 21 a data storage device 4 suitable for wireless transmission is interposed, in the present case applied onto a support 5. The latter makes a further layer of main body 11 laminated onto first plastic layer 21. Preferably, device 4 is of a so-called RFID type.

Referring to Figures 1A to 1F, it will be now described a preferred embodiment for carrying out the method according to the invention for obtaining anti-counterfeiting labels as the one considered so far.

In Figure 1B a preliminary step of the method is shown schematically, in which step a first protecting sheet 310 ("*overlay*") is laminated with a first sheet of rigid plastic material 210 ("*core*") and concomitantly a supporting sheet 50 bearing a plurality of storage devices of the type already described above is laminated, always with the first plastic sheet 210, oppositely with respect to the protecting sheet 310.

Likewise, in Figure 1A another preliminary step of the method is schematically illustrated, in which a second protecting sheet 320 ("*overlay*") is laminated with a second sheet 220 ("*core*") of rigid plastic material.

The plastic materials preferred for the manufacturing of rigid sheets 210 and 220 have already been illustrated above with reference to the description of the anti-counterfeiting label 1.

In the example considered herein, in a step still preliminary to the laminating one illustrated in Figures 1A and 1B, onto both the plastic sheets 210 and 220 a plurality of anti-counterfeiting elements are applied, denoted respectively by 71 and 72, e.g. security holograms or other elements obtained by UV litho printing with iris, UV fluorescent printing, intaglio printing, silk-screen printing with OVI inks and/or laser engraving.

Protecting sheets 310 and 320 are therefore preferably transparent and apt to safeguard integrity of the anti-counterfeiting elements applied or obtained onto the underlying plastic sheet.

Moreover, in a variant embodiment also protecting sheets 310 and 320 may bear holograms and/or be personalized by laser engraving technology.

Referring to Figures 1D and 1C, these show a step of pre-punching composite sheets 310-210-50 and 320-220 carried out by shaped punches. In particular, for each of the labels to be formed, material is removed at the area intended to form the respective textile extension. In Figure 1D, one of the openings thus obtained is denoted by way of example by 120 for the composite sheet including the first plastic sheet 210. Of course, the openings must be made in register on the two composite sheets so as to be perfectly matching when sheets are overlapped.

In a variant embodiment, the punching of the two composite sheets may be carried out jointly instead that separately.

Referring to Figure 1E, a subsequent step of the method provides for a lamination of the above-described two composite sheets with an intermediate sheet or layer 30 of textile material, preferably cotton. This step is carried out so as to have the textile sheet 30 lie interposed between second plastic layer 220 and data carrier 50. In this way, the openings previously obtained are closed by the intermediate textile sheet 30.

The plates utilized for this latter laminating operation are shaped so as to compensate for the difference in thickness in the areas where material has been removed from the more external layers.

All the laminating operations mentioned hereto are preferably carried out under hot conditions.

The end product of the operations described hereto is shown in Figure 1F.

Then, by a further punching it is possible to separate the labels embedded in the composite end structure, thereby obtaining anti-counterfeiting labels with a fabric layer partly embedded in the plastic material and partly free.

Preferably, the end thickness of main body 11 of each label is comprised in a range of about 0.6-1.0 mm.

In variant embodiments not of the invention, the label may have a plurality of flexible extensions that can be sewn, preferably of a textile material, instead of only one. Such extensions may e.g. extend at plural sides of the label.

Moreover, always according to variant embodiments, the flexible extension and the corresponding intermediate layer of the main body may be made of a flexible synthetic material, e.g. polyester.

Again, the coupling among the various layers/sheets of the main body may be carried out by gluing or other technique as an alternative to, or in association with, lamination.

By now, it will be better appreciated that the method of the invention allows to obtain labels of rigid plastic material, with a flexible extension - preferably textile - applicable, preferably by sewing, onto any support of paper or fabric and suitable in particular to be applied onto clothing products, onto bound paper products and in general onto high-value products. Moreover, the flexible extension may be shaped so as to be anchored to products having a peculiar shape (e.g., bottles of wine and spirits).

Therefore, the labels thus obtained allow authentication and also protection of high-value textile products, such as high fashion items of clothing, allowing the traceability thereof by radiofrequency reading.

Moreover, the label not of the invention may also have the format of the data page of booklet documents and be bound thereinside, as well as be used to record environmental parameters in case of plant maintenance booklets.

Such a label finds advantageous application also in the field of storehouse and transport logistics, access control, animal identification and anti-theft in general.

The present invention has been hereto described with reference to preferred embodiments thereof. It is understood that other embodiments might exist falling within the same inventive core as defined by the scope of protection of the claims reported below.

## Claims

1. A method of manufacturing anti-counterfeiting labels (1), each having a multilayer main body (11) embedding a data storage device (4) suitable for wireless transmission and an extension (12) of a material flexible and anchorable onto a product or support, which method provides the steps of:
(a) pre-punching a first (210) and a second (220) sheet of rigid plastic material, which are to form the main bodies (11) of the labels, at areas intended to form the flexible extensions (12); and
(b) coupling the first (210) and the second (220) sheet of plastic material with an intermediate layer (30) of flexible material, which intermediate layer (30) forms the flexible extensions (12) of the labels,
which method comprises, prior to said step (a), a step of coupling the first (210) and the second (220) plastic sheet with a respective protecting coating (310, 320), preferably transparent,
and wherein said step (a) provides for the first (210) or the second (220) sheet of plastic material to be punched already coupled with the data storage devices (4).

2. The method according to claim 1, wherein said step (a) provides for a separate punching of the first (210) and of the second (220) sheet of plastic material.

3. The method according to claims 1 or 2, providing applying, onto the first (210) and/or on the second (220) plastic sheet, anti-counterfeiting elements (71, 72) by a process selected from a group comprising: UV litho printing with iris, UV fluorescent printing, intaglio printing, silk-screen printing with OVI inks, applying of a security hologram, laser engraving.

4. The method according to any one of the claims 1 to 2, wherein said step (b) is carried out by lamination and/or gluing.

5. The method according to any one of the claims 1 to 4, which is used for the simultaneous manufacturing of a plurality of anti-counterfeiting labels (1), each one comprising:
▪ a multilayer main body (11) embedding a data storage device (4) suitable for wireless transmission, which main body (11) in its turn comprises a first (21) and a second (22) layer of a rigid plastic material between which an intermediate layer (3) of a flexible material is interposed; and
▪ a flexible extension (12) of said main body (11), anchorable onto a product or support and made by a portion of said intermediate layer (3) protruding beyond said main body (11).

6. The method according to claim 5, wherein one or both said first (21) and second (22) plastic layers in turn have a respective protective coating (31, 32), preferably transparent.

7. The method according to claim 5 or 6, wherein one of or both said first (21) and second (22) plastic layers bear at least one anti-counterfeiting optical element (71, 72), preferably a hologram.

8. The method according to any one of claims 5 to 7, wherein one of or both said first (21) and second (22) plastic layers are made of polycarbonate.

9. The method according to any one of claims 5 to 8, wherein one of or both said first (21) and second (22) plastic layers are made of a material selected from a group comprising: PVC, PC and PET/PETG.

10. The method according to any one of claims 5 to 9, wherein said flexible intermediate layer is made of a natural or synthetic textile material.

11. The method according to any one of claims 5 to 10, wherein said flexible extension (12) can be sewn onto a product or support.

12. The method according to any one of claims 5 to 11, wherein said data storage device (4) is of an RFIDtype.

13. The method according to any one of claims 5 to 12, wherein said datastorage device (4) is laminated with and/or glued onto one of said first (21) and second (22) plastic layers.

14. The method according to any one of claims 5 to 13, wherein said main body (11) has a thickness comprised in a range of about 0.6-1.0 mm.

## Patentansprüche

1. Verfahren zur Herstellung von fälschungssicheren Etiketten (1), die jeweils einen mehrschichtigen Hauptkörper (11) aufweisen, der eine zur drahtlosen Übertragung geeignete Datenerfassungseinrichtung (4) aufweist und eine Verlängerung (12) in einem flexiblen Material enthält, das in einem Produkt oder Träger verankert ist, wobei das Verfahren die Schritte umfasst:
(a) Vorbohrung einer ersten (210) und einer zweiten (220) Folie aus starrem Kunststoffmaterial, die die Hauptkörper (11) der Etiketten bilden sollen, in Oberflächen, die die flexiblen Verlängerungen (12) bilden sollen; und
(b) Kopplung der ersten (210) und der zweiten (220) Folie aus Kunststoffmaterial mit einer Zwischenschicht (30) aus flexiblem Material, wobei die Zwischenschicht (30) die flexiblen Verlängerungen (12) der Etiketten bildet,
wobei das Verfahren vor dem Schritt (a) einen Schritt der Kopplung der ersten (210) und der zweiten (220) Folie aus Kunststoffmaterial mit einer jeweiligen Schutzbeschichtung (310, 320), die vorzugsweise transparent ist, umfasst,
und wobei der Schritt (a) einer Perforation der ersten (210) oder zweiten (220) Kunststofffolie durchführt, die bereits mit den Datenerfassungseinrichtungen (4) verbunden ist.

2. Verfahren nach Anspruch 1, wobei der Schritt (a) eine getrennte Perforation der ersten (210) und der zweiten (220) Folie aus Kunststoffmaterial umfasst.

3. Verfahren nach Anspruch 1 oder 2, wobei auf der ersten (210) und/oder der zweiten (220) Folie aus Kunststoff fälschungssichere Elemente (71, 72) mit einem Verfahren aufgebracht werden, das die folgende Gruppe umfasst: UV-Lithografiedruck mit Iris, fluoreszierender UV-Druck, Tiefdruck, Siebdruck mit OVI-Tinten, Aufbringung eines Sicherheitshologramms, Lasergravur.

4. Verfahren nach einem der Ansprüche 1 bis 2, wobei im Schritt (b) ein Laminieren und/oder Kleben erfolgt.

5. Verfahren nach einem der Ansprüche 1 bis 4, verwendet zur gleichzeitigen Herstellung mehrerer fälschungssicherer Etiketten (1), die jeweils Folgendes umfassen:
- einen mehrschichtigen Hauptkörper (11), der eine zur drahtlosen Übertragung geeignetes Datenerfassungseinrichtung (4) umschließt, wobei der Hauptkörper (11) wiederum erste (21) und zweite (22) Schichten aus einem starren Kunststoffmaterial umfasst, wobei eine Zwischenschicht (3) aus einem flexiblen Material dazwischen angeordnet ist; und
- eine flexible Verlängerung (12) des Hauptkörpers (11), die an einem Produkt oder Träger verankert werden kann und aus einem über den Hauptkörper (11) hinausragenden Teil der Zwischenschicht (3) besteht.

6. Verfahren nach Anspruch 5, wobei eine oder beide der ersten (21) und zweiten (22) Schichten aus Kunststoffmaterial wiederum jeweils eine Schutzbeschichtung (31, 32), vorzugsweise transparent, aufweisen.

7. Verfahren nach Anspruch 5 oder 6, wobei eine oder beide der ersten (21) und zweiten (22) Schichten aus Kunststoffmaterial mindestens ein fälschungssicheres optisches Element (71, 72), vorzugsweise ein Hologramm, tragen.

8. Verfahren nach einem der Ansprüche 5 bis 7, wobei eine oder beide der ersten (21) und zweiten (22) Schichten aus Kunststoffmaterial aus Polycarbonat gebildet sind.

9. Verfahren nach einem der Ansprüche 5 bis 8, wobei eine oder beide der ersten (21) und zweiten (22) Schichten aus Kunststoffmaterial aus einem Material bestehen, das aus einer Gruppe ausgewählt ist, die: PVC, PC und PET/PETG, umfasst.

10. Verfahren nach einem der Ansprüche 5 bis 9, wobei die flexible Zwischenschicht aus einem natürlichen oder synthetischen Textilmaterial hergestellt wird.

11. Verfahren nach einem der Ansprüche 5 bis 10, wobei die flexible Verlängerung (12) an ein Produkt oder einen Träger angenäht werden kann.

12. Verfahren nach einem der Ansprüche 5 bis 11, wobei die Datenerfassungseinrichtung (4) vom Typ RFID ist.

13. Verfahren nach einem der Ansprüche 5 bis 12, wobei die Datenerfassungseinrichtung (4) auf eine der ersten (21) und zweiten (22) Kunststoffschichten laminiert und/oder geklebt wird.

14. Verfahren nach einem der Ansprüche 5 bis 13, wobei der Hauptkörper (11) eine Dicke zwischen etwa 0,6 und 1,0 mm aufweist.

## Revendications

1. Procédé de production d'étiquettes anti-contrefaçon (1), chacune étant dotée d'un corps principal multicouche (11) qui incorpore un dispositif de collecte de données (4) approprié pour une transmission sans fil et une extension (12) dans un matériau flexible et ancré dans un produit ou support, le procédé comprenant les opérations :
(a) perforation préalable d'une première (210) et d'une deuxième (220) feuilles de matière plastique rigide, qui doivent former les corps principaux (11) des étiquettes dans des surfaces prévues pour former les extensions flexibles (12); et
(b) couplage de la première (210) et de la deuxième (220) feuilles de matière plastique avec une couche intermédiaire (30) de matière flexible, la couche intermédiaire (30) formant les extensions flexibles (12) des étiquettes,
le procédé comprenant avant l'opération (a) une opération de couplage de la première (210) et de la deuxième (220) feuilles de matière plastique avec un revêtement protecteur respectif (310, 320), de préférence transparent,
et l'opération (a) provoquant la perforation de la première (210) ou de la deuxième (220) feuille de matière plastique déjà couplée aux dispositifs de collecte de données (4).

2. Procédé selon la revendication 1, dans lequel l'opération (a) réalise une perforation séparée de la première (210) et de la deuxième (220) feuilles de matière plastique.

3. Procédé selon les revendications 1 ou 2, réalisant une application sur la première (210) et/ou sur la deuxième (220) feuille de matière plastique d'éléments anti-contrefaçon (71, 72) au moyen d'un procédé choisi parmi un groupe comprenant: impression lithographique UV avec iris, impression UV fluorescente, impression taille-douce, sérigraphie avec des encres OVI, application d'un hologramme de sécurité, gravure laser.

4. Procédé selon l'une des revendications 1 à 2, dans lequel l'opération (b) est réalisée par laminage et/ou collage.

5. Procédé selon l'une des revendications 1 à 4, utilisé pour la réalisation simultanée d'une pluralité d'étiquettes anti-contrefaçon (1), chacune comprenant chacune
- un corps principal multicouche (11) qui enserre un dispositif de collecte de données (4) adapté pour la transmission sans fil, le corps principal (11) comprenant à son tour une première (21) et une deuxième (22) couches d'un matériau plastique rigide, entre lesquelles est interposée une couche intermédiaire (3) d'un matériau flexible; et
- une extension flexible (12) du corps principal (11) qui peut être ancrée à un produit ou support et est réalisée à partir d'une partie de la couche intermédiaire (3) dépassant au-delà du corps principal (11).

6. Procédé selon la revendication 5, dans lequel l'une ou les deux des première (21) et deuxième (22) couches de matière plastique comportent à leur tour un revêtement protecteur respectif (31, 32), de préférence transparent.

7. Procédé selon la revendication 5 ou 6, dans lequel l'une ou les deux desdites première (21) et deuxième (22) couches de matière plastique supportent au moins un élément optique anti-contrefaçon (71, 72), de préférence un hologramme.

8. Procédé selon l'une des revendications 5 à 7, dans lequel l'une ou les deux desdites première (21) et deuxième (22) couches de matière plastique sont formées de polycarbonate.

9. Procédé selon l'une des revendications 5 à 8, dans lequel l'une ou les deux desdites première (21) et deuxième (22) couches de matière plastique sont constituées d'un matériau choisi dans un groupe comprenant : PVC, PC et PET/PETG.

10. Procédé selon l'une des revendications 5 à 9, dans lequel la couche intermédiaire flexible est réalisée à partir d'un matériau textile naturel ou synthétique.

11. Procédé selon l'une des revendications 5 à 10, dans lequel l'extension flexible (12) peut être cousue sur un produit ou un support.

12. Procédé selon l'une des revendications 5 à 11, dans lequel le dispositif de collecte de données (4) est de type RFID.

13. Procédé selon l'une des revendications 5 à 12, dans lequel le dispositif de collecte de données (4) est laminé et/ou collé sur l'une desdites première (21) et deuxième (22) couches de matière plastique.

14. Procédé selon l'une des revendications 5 à 13, dans lequel le corps principal (11) a une épaisseur comprise entre environ 0,6 et 1,0 mm.
